# EUROPEAN PATENT APPLICATION

(11) **EP 2 159 995 A1**
(43) Date of publication of application: **03.03.2010**
(21) Application number: 08764079.3
(22) Date of filing: 10.06.2008
(51) Int. Cl.: H04M 1/02

(54) **PORTABLE TERMINAL**

(30) Priority: 15.06.2007 JP 2007159407; 08.08.2007 JP 2007206816; 31.10.2007 JP 2007284178
(71) Applicant: Panasonic Corporation, Kadoma-shi Osaka 571-8501 (JP)
(72) Inventor: UETA, Yoshiaki, Osaka 540-6207 (JP); MATSUKI, Takeo, Osaka 540-6207 (JP); TABATA, Taichi, Osaka 540-6207 (JP); TOMOBE, Shinji, Osaka 540-6207 (JP); MANDA, Yasutoki, Osaka 540-6207 (JP); MOCHIZUKI, Kenichi, Osaka 540-6207 (JP)
(74) Representative: Grünecker, Kinkeldey, Stockmair & Schwanhäusser Anwaltssozietät
(86) International application number: PCT/JP2008/001483
(87) International publication number: WO 2008/155882

(57) **Abstract**

A portable terminal in which, even when an impact caused by dropping or the like acts on an engaging portion of a second rotating member, it is possible to prevent a lock pin for fixing the second rotating member, and an engaging portion from being broken is provided.

A second housing portion 56 in which a magnet 63 of a second engaging portion 46 is disposed attracts an engaging pin 45 formed by a magnetic material, by a magnetic force to project the engaging pin 45 from the surface 11A of a first case 11, and a second case 12 is caused to rotate about a second rotating axis 32, whereby a second projecting portion 52 is housed in the second housing portion 56 and the engaging pin 45 is locked. The second projecting portion 52 is rotatable about the axis of a first projecting portion 51. In an insufficient engagement state such as the case where the engaging pin 45 is not sufficiently projected, or that where the second projecting portion 52 is not at a predetermined position, when an external force which causes the second case 12 to relatively move with respect the first case 11 acts, therefore, the engaging pin 45 is disengaged from the second engaging portion 46. Consequently, the engaging pin 45, the periphery of the second engaging portion 46 in the second case 12, and the like can be prevented from being broken.

## Description

### Technical Field

The present invention relates to a portable terminal in which first and second cases are coupled to each other in a foldable manner by a coupling portion.

### Background Art

In portable terminals such as mobile telephones, conventionally, terminals of the foldable type in which two cases are rotatably coupled to each other through a coupling portion are in widespread use. For example, a portable terminal is known in which a lower case (first case) is to be held with the hand by the user when the portable terminal is used, an operating portion including a large number of input keys and function keys is disposed on the surface of the lower case, and a displaying portion (LCD) is disposed on the surface of an upper case (second case).

On the other hand, Patent Reference 1 discloses a portable terminal in which a coupling portion has: a first rotating member; and a second rotating member that is coupled to a place other than a middle portion of the first rotating member, and that is coupled to an upper case in a direction intersecting with the first rotating member.

According to the portable terminal, in a state where the upper and lower cases are closed, the upper case rotates about the first rotating member with respect to the lower case, thereby enabling a so-called longitudinal opening operation, and, in the state where the upper and lower cases are closed, the upper case rotates about the second rotating member with respect to the lower case, thereby enabling a so-called lateral opening operation,

In the portable terminal which can be opened in both the longitudinal and lateral directions, the lower and upper cases are supported only in one side end portion by the second rotating member. Namely, each of the lower and upper cases is cantilever-supported by the second rotating member. Therefore, it is contemplated that, when the portable terminal is to be laterally opened, a relatively large load is applied to the second rotating member.
In Patent Reference 1, a portable terminal proposed in which, when the portable terminal is to be laterally opened, a projection disposed in a longitudinal middle portion of a lower case, and a buffer member disposed in a longitudinal middle portion of an upper case are engaged with each other.
According to the portable terminal of Patent Reference 1, when the portable terminal is to be laterally opened, the laterally opened state is stabilized by restricting the rotating about a second rotating shaft.

According to Patent Reference 2, lower and upper cases are rotatably connected to each other through a coupling portion. A portable terminal is disclosed in which the coupling portion has first and second rotating shafts that extend in perpendicular directions, a shaft passing portion that rotatably supports the second rotating shaft is disposed in the lower case, and a shaft passing portion that rotatably supports the first rotating shaft is disposed in the upper case.

According to the portable terminal, in a state where the upper and lower cases are closed, the upper case rotates about the first rotating shaft with respect to the lower case, thereby enabling the so-called longitudinal opening operation. At this time, a lock claw disposed in the tip end of the first rotating shaft is fitted into a lock hole disposed in the upper face of the lower case, to be locked. By contrast, in the state where the upper and lower cases are closed, the upper case rotates about the second rotating shaft with respect to the lower case, thereby enabling the so-called lateral opening operation At this time, a lock claw disposed in the tip end of the upper case is locked by a lock hole disposed in a hinge (bearing) of the tip end of the second rotating shaft, and the lock claw of the first rotating shaft is disengaged from the lock hole disposed in the upper face of the lower case.
Patent Reference 1: JP-A-2006-22899
Patent Reference 2: JP-A-2003-60759

### Disclosure of the Invention

### Problems that the Invention is to Solve

When, for example, the portable terminal of Patent Reference 1 in the laterally opened state drops and an external force which displaces the lower and upper cases so that they approach each other is applied, a load is concentrated in the one side end portion of the second rotating member because of the cantilever structure in which the lower and upper cases are supported only in one side end portion by the second rotating member, thereby causing a possibility that a specific portion is broken.
However, Patent Reference 1 is not directed to a technique for reducing the concentration of an impact caused by dropping or the like to a specific portion of the second rotating member. Therefore, an effect of protecting the second rotating member cannot be expected.

When, for example, the portable terminal of Patent Reference 2 in the laterally opened state drops, an external force acts on the lock claw which fixes the second rotating shaft between the upper and lower cases. At this time, even in the case where, when the lock claw is attached to the lock hole while being completely fitted thereinto, sufficient strength is obtained, there is a problem in that, when the lock claw is incompletely fitted into the lock hole, the lock claw is broken or the upper or lower case in which the lock hole is formed is broken.

The invention has been conducted in order to solve the problems. It is an object of the invention to provide a portable terminal in which an impact caused by dropping or the like is concentrated to a specific portion of a second rotating member.

The invention has been conducted in order to solve the problems. It is an object of the invention to provide a portable terminal in which, even when an impact caused by dropping or the like acts on an engaging portion of a second rotating member, it is possible to prevent a lock pin for fixing the second rotating member, and an engaging portion from being broken.

### Means for Solving the Problems

The portable terminal of the invention is a portable terminal including: a first case including an operating portion; a second case including a displaying portion; and a coupling portion which rotatably couples the first case and the second case to each other, wherein the coupling portion is configured by: a first rotating member which is coupled to the first case to enable the second case to rotating with respect to the first case about a first rotating axis; and a second rotating member which is coupled to a short-side direction end portion of the second case to enable the second case to rotating with respect to the first case about a second rotating axis that is perpendicular to the first rotating axis, the first case has a first engaging portion in a face including the operating portion, and on a side which is opposite in a longitudinal direction to a side where the first case is coupled to the coupling portion, the second case has a second engaging portion in a longitudinal direction of a face including the displaying portion, at a position corresponding to the first engaging portion, and on a side which is opposite to a side where the second rotating member is coupled to the coupling portion, the first engaging portion and the second engaging portion are not locked to each other in a state where the first case and the second case overlap with each other, and the first engaging portion and the second engaging portion are engaged and locked to each other in a state where the second case rotates about the second rotating axis to be opened.

Here, the first rotating axis and the second rotating axis indicate the directions of the center lines of rotation of the first case and the second case in transition where the first case and the second case are changed from the closed state to a longitudinally opened state or a laterally opened state.
By contrast, the first rotating member and the second rotating member are members serving as a support shaft for enabling the second case to rotate with respect to the first case. In accordance with rotation of the second case with respect to the first case, the first rotating member or the second rotating member rotates about the axis.

According to the configuration, the second case has the second engaging portion on the side which is opposite to the side where the second rotating member is coupled to the coupling portion, in the longitudinal direction of the side where the displaying portion is disposed. The first case has the first engaging portion on the face including the operating portion opposed to the second engaging portion.
According to the configuration, in the closed state, the first engaging portion and the second engaging portion are not locked to each other. In the transition where the closed state is changed to the longitudinally opened state, the second case smoothly rotates with respect to the first case about the first rotating axis while the first engaging portion and the second engaging portion are not obstructive.

According to the configuration, when the second case starts to rotate with respect to the first case about the second rotating axis, the first engaging portion and the second engaging portion are engaged and locked to each other. During a period from when the transition from the closed state to the laterally opened state is started, to when a completely laterally opened state is attained, even when, for example, the portable terminal drops and an external force is applied to the first case or the second case, therefore, a part of the load due to the dropping can be supported by the first engaging portion and the second engaging portion.
Therefore, the load due to dropping or the like can be prevented from being concentrated to the second rotating member, and the second rotating axis member can be prevented from being broken.

Furthermore, the invention is **characterized in that** a magnet is disposed in the second engaging portion, the first engaging portion is configured by a magnetic material, and the first engaging portion is projected by a magnetic force of the magnet to be engaged with the second engaging portion.

According to the configuration, in the portable terminal in the closed state, the first engaging portion is projected by the magnetic force to be engaged with the second engaging portion so as not to be locked. Therefore, the closed state can be smoothly transitioned to the longitudinally opened state, and, when the laterally opening operation is started in the closed state, the locked state is rapidly produced.

Furthermore, the invention is **characterized in that** the magnet of the second engaging portion is placed in a side portion in a direction along which the first engaging portion is projected.

According to the configuration, the magnet is placed in the side portion in the direction along which the first engaging portion is projected. Even when, in the state where the portable terminal is closed, therefore, the first engaging portion is housed in the first case, the first engaging portion can be surely projected by the magnetic force of the magnet.

Furthermore, the invention is **characterized in that** the terminal further includes a magnet at a position which, in the first case, is separated by a constant distance from the first engaging portion, and a side opposite to a face opposed to the second case, and, in a state where the second case rotates with respect to the first case about the first rotating axis to be in an opened state, the first engaging portion is caused not to be projected, by a magnetic force of the magnet.

According to the configuration, in the longitudinally opened state where the second case rotates about the first rotating axis to be opened, the influence of the magnetic force of the magnet of the second engaging portion is eliminated, and hence that of the magnetic force of the magnet in the first case becomes relatively stronger. Therefore, the first engaging portion is housed while being caused not to be projected from the first case, by the magnet in the first case.
In this way, the first engaging portion can be set not to be projected from the first case in the longitudinally opened state where the second case rotates about the first rotating axis to be opened, and hence there is no possibility that, during a call, for example, the first engaging portion is projected from the first case to interfere with the call.

Furthermore, the Invention is **characterized in that**, in the first case, a sheet metal is placed between the first engaging portion and the magnet.

According to the configuration, a sheet metal is placed between the first engaging portion and the magnet in the first case. Therefore, the magnetic force of the magnet in the first case which affects the first engaging portion can be set by adequately setting the material, thickness, area, and the like of the sheet metal. When the first engaging portion is projected, consequently, the first engaging portion can be held to a predetermined projection position.

Furthermore, the invention is **characterized in that** the first engaging portion is configured by an engaging pin having: a first projecting portion; and a second projecting portion which intersects with the first projecting portion, and which extends along the second rotating axis, and the second engaging portion is configured by: a first housing portion which houses the first projecting portion in an opening portion, and which rotates with respect to the second case about the second rotating axis; and a second housing portion which houses the second projecting portion in an opening portion, and which is fixed to the second case.

According to the configuration, when the rotating of the second case with respect to the first case about the second rotating axis is started to start the transition from the closed state to the laterally opened state, also the second housing portion rotates in conjunction with the second case, and hence the opening direction of the opening portion of the second housing portion is changed with respect to the opening portion of the first housing portion. Therefore, the engaging pin which is the first engaging portion is prevented from being pulled out from the second engaging portion, and the locking between the first engaging portion and the second engaging portion is attained.

Furthermore, the invention is **characterized in that**, when the first projecting portion is housed and the second case rotates about the second rotating axis, the opening portion of the first housing portion is at a position opposed to an operating portion face of the first case.

According to the configuration, when the second case rotates about the second rotating axis, the first housing portion is kept to a state where the portion is stilled so that the opening portion is at the position opposed to the operating portion face or the first case. Therefore, the second case can smoothly rotating while maintaining the state where the first projecting portion is housed in the opening portion of the first housing portion.

Furthermore, the invention is **characterized in that** the opening portion of the second housing portion is formed into a concave shape, and has a curved face in which a radius or curvature is larger as more advancing from a bottom portion of the opening portion toward an opening.

The curved face of the opening portion of the second housing portion is formed so that the radius of curvature is larger as more advancing from the bottom portion toward the opening. When the second housing portion rotates in conjunction with the second case, therefore, the second projecting portion of the engaging pin can be easily picked up by the opening portion of the second housing portion.

It is characterized that a return spring which makes the opening portion of the first housing portion coincident with the opening portion of the second housing portion is disposed.

According to the configuration, in the state where the portable terminal is closed, or in the so-called longitudinally opened state where the portable terminal is opened about the first rotating axis, the opening portion of the first housing portion and that of the second housing portion can be made coincident with and surely continuous to each other.
Consequently, there is no possibility that, when the closed state is transitioned to the longitudinally opened state by rotating the first case about the first rotating axis, the engaging pin which is the first engaging portion is smoothly pulled out from the first housing portion and the second housing portion, and there is no possibility that the rotating of the portable terminal is disturbed.

Furthermore, the invention is **characterized in that**, in a face where the second case is coupled to the coupling portion, the terminal further includes a pair of engaging portions on a side opposite in a short-side direction to the side where the second rotating axis member is placed, and, in the state where the first case and the second case overlap with each other, rotating about the second rotating axis is restricted by the pair of engaging portions.

According to the configuration, in the state where the first case and the second case overlap with each other, rotating about the second rotating axis is restricted unless engagement by the pair of engaging portions is cancelled. Therefore, it is possible to prevent the second case from accidentally rotate about the second rotating axis.

Furthermore, the portable terminal of the invention is a portable terminal including: a first case including an operating portion; a second case including a displaying portion; and a coupling portion which rotatably couples the first case and the second case to each other, wherein the coupling portion is configured by: a first rotating member which is coupled to the first case to enable the second case to rotate with respect to the first case about a first rotating axis; and a second rotating member which is coupled to a short-side direction end portion of the second case to enable the second case to rotate with respect to the first case about a second rotating axis that is perpendicular to the first rotating axis, the first case has a first engaging portion configured by an engaging pin having: a first projecting portion which is projected from a face including the operating portion, on a side opposite in a longitudinal direction to a side where the first case is coupled to the coupling portion; and a second projecting portion which intersects with the first projecting portion, and which extends along the second rotating axis, the second case has a second engaging portion in a longitudinal direction of a face including the displaying portion, at a position corresponding to the first engaging portion, the second engaging portion being configured by: a first housing portion which houses the first projecting portion in an opening portion, and which rotates with respect to the second case about the second rotating axis; and a second housing portion which houses the second projecting portion in an opening portion where an inclined face is formed in an inner face, and which is fixed to the second case, the first engaging portion and the second engaging portion are not locked to each other in a state where the first case and the second case overlap with each other, the first engaging portion is projected by a magnetic force of the magnet, and the first engaging portion and the second engaging portion are engaged and locked to each other in a state where the second case rotates about the second rotating axis to be opened, and, in a transition state between the opened state and the closed state, in a state where the second projecting portion is housed in the second housing portion, the second projecting portion rotates along the inclined face of the second housing portion about an axis of the first projecting portion, to be disengaged from the second housing portion.

Here, the first rotating axis and the second rotating axis indicate the directions of center lines of rotation of the first case and the second case in transition where the first case and the second case are changed from the closed state to the longitudinally opened state or the laterally opened state.
By contrast, the first rotating member and the second rotating member are members serving as a support shaft for enabling the second case to rotate with respect to the first case. In accordance with rotation of the second case with respect to the first case, the first rotating member or the second rotating member rotates about the axis.

According to the configuration, the longitudinally opened state is formed by opening the second case with respect to the first case about the first rotating axis of the coupling portion, and the laterally opened state is formed by opening the second case about the second rotating axis. When the laterally opening operation is to be performed, the first engaging portion disposed in the upper face of the first case, and the second engaging portion disposed at a position in the surface of the second case and corresponding the first engaging portion are engaged with each other, whereby the second rotating axis is fixed along the longitudinal direction of the first case, so that the laterally opening operation is enabled. At this time, the second housing portion in which the magnet of the second engaging portion is disposed attracts the engaging pin formed by a magnetic material, by a magnetic force to project the engaging pin from the surface of the first case, and the second case is caused to rotating about the second rotating axis, whereby the second projecting portion is housed in the second housing portion and the engaging pin is locked. The second projecting portion is rotatable about the axis of the first projecting portion. In the transition state between the opened state and the closed state, in an insufficient engagement state such as the case where the engaging pin is not sufficiently projected, or that where the second projecting portion is not at a predetermined position, when an external force which causes the second case to relatively move with respect the first case acts, therefore, the second projecting portion in the state where the portion is housed in the second housing portion rotates along the inclined face of the second housing portion about the axis of the first projecting portion, to be disengaged from the second housing portion. Consequently, it is possible to prevent the engaging pin, the periphery of the second engaging portion in the second case, and the like from being broken.

Furthermore, the portable terminal of the invention is **characterized in that**, in the first engaging portion, the first projecting portion and the second projecting portion are integrally formed.

According to the configuration, the first projecting portion and the second projecting portion are integrally formed, and hence the structure of the engaging pin can be simplified.

Furthermore, the portable terminal of the invention is **characterized in that** the portable terminal further includes a holding portion which holds the first engaging portion to an interior of the first case, and, in a state where the second case rotates about the fist rotating axis to be opened, a concave portion which houses the second projecting portion is configured in a top face of the holding portion so that the first engaging portion does not project from the displaying portion face, the concave portion forming an inclination for guiding the second projecting portion.

According to the configuration, in the state where the second case rotates about the first rotating axis to be opened, while being guided by the inclination, the second projecting portion is housed in the concave portion which is configured in the top face of the holding portion, and hence the rotatable engaging pin can be surely housed.

Furthermore, the portable terminal of the invention is **characterized in that** the inclined face of the second housing portion is an edge portion on a side of the first housing portion, and disposed on a side of a side end face of the second case.

According to the configuration, in the case where the first engaging portion and the second engaging portion are not properly engaged with each other, the second projecting portion of the first engaging portion can be disengaged from the second housing portion along the inclined face disposed in the second housing portion which houses the second projecting portion.

### Effects of the Invention

According to the portable terminal of the invention, the engaging portions for maintaining the relative positions of the first case and the second case are disposed. Therefore, the invention has an effect that an impact caused dropping or the like can be prevented from being concentrated to a specific portion of the second rotating member.

According to the portable terminal of the invention, moreover, the second housing portion in which the magnet of the second engaging portion is disposed attracts the engaging pin formed by a magnetic material, by a magnetic force to project the engaging pin from the surface of the first case, and the second case is caused to rotate about the second rotating axis, whereby the second projecting portion is housed in the second housing portion and the engaging pin is locked. The second projecting portion is rotatable about the axis of the first projecting portion. In an insufficient engagement state such as the case where the engaging pin is not sufficiently projected, or that where the second projecting portion is not at a predetermined position, when an external force which causes the second case to relatively move with respect the first case acts, therefore, the engaging pin is disengaged from the second engaging portion. Consequently, the invention has an effect that it is possible to prevent the engaging pin, the periphery of the second engaging portion in the second case, and the like from being broken.

### Brief Description of the Drawings

[Fig. 1] (A) is a perspective view of a state where a portable terminal of a first embodiment of the invention is closed, as viewed from the right side, (B) is a side view showing the state where the portable terminal of the first embodiment is closed, and (C) is a plan view showing a state where an upper case of the portable terminal of the first embodiment is removed.
[Fig. 2] (A) is a perspective view showing a state where the portable terminal of the first embodiment is longitudinally opened, and (B) is a side view showing the state where the portable terminal of the first embodiment is longitudinally opened.
[Fig. 3] (A) is a perspective view showing a state where the portable terminal of the first embodiment is laterally opened, and (B) is a perspective view showing a state where the portable terminal of the first embodiment is closed, as viewed from the left side.
[Fig. 4] Fig. 4 is an exploded perspective view showing second engaging means of the portable terminal of the first embodiment.
[Fig. 5] Fig. 5 is an exploded perspective view showing first engaging means of the portable terminal of the first embodiment
[Fig. 6] Fig. 6 is a perspective view showing a second engaging portion of the upper case in the first embodiment.
[Fig. 7] (A) is an enlarged view of portion A of Fig. 6, and (B) is a perspective view showing a second housing portion.
[Fig. 8] (A) is a perspective view showing a state where the second engaging portion is attached to the upper case, and (B) is an enlarged view of portion B of Fig. 8(A).
[Fig. 9] Fig. 9 is a perspective view showing the first engaging means of the portable terminal of the first embodiment.
[Fig. 10] (A) is a plan view showing the first engaging means of the portable terminal of the first embodiment, and (B) is a plan view showing a state where an engaging pin is engaged with the second engaging portion of the first engaging means.
[Fig. 11] (A) is a perspective view showing a state where the upper case of the portable terminal of the first embodiment is laterally opened, and (B) is an enlarged view of portion C of Fig. 11(A).
[Fig. 12] (A) is a view showing the first engaging means in the state where the portable terminal of the first embodiment is closed, and Fig. 12(B) is a view showing the first engaging means in a state where the upper case of the portable terminal of the first embodiment rotates about a second rotating axis.
[Fig. 13] (A) is a plan view of a first engaging portion, (B) is a side view of the first engaging portion, and (C) is a front view of the first engaging portion.
[Fig. 14] (A) is a front view of the second engaging portion, and (B) is an exploded section view of the second engaging portion.
[Fig. 15] Fig. 15 is a diagram showing a position relationship between the shape of the tip end of a second projecting portion, and an inclined face of the second housing portion.
[Fig. 16] Fig. 16 is a side view of a modification of the invention.

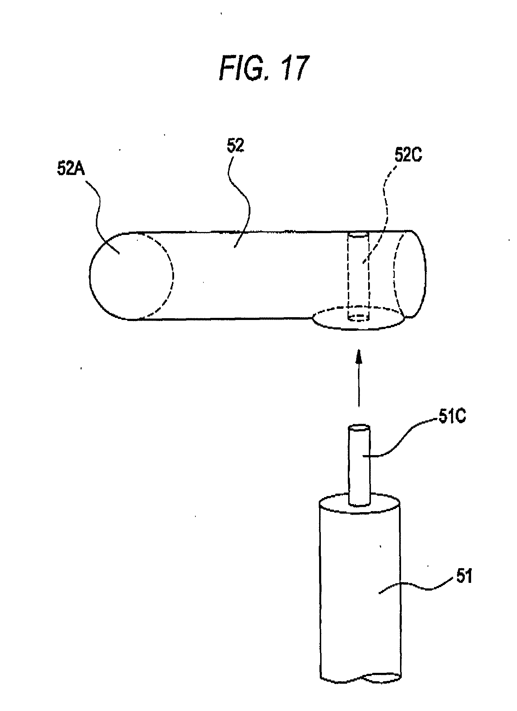

[Fig. 17] Fig. 17 is an exploded perspective view of an engaging pin of a second embodiment.

### Description of Reference Numerals and Signs

- 10: portable terminal
- 11: lower case (first case)
- 12: upper case (second case)
- 13: coupling portion
- 15, 15A: first engaging means
- 16: second engaging means
- 23: operating portion
- 28: displaying portion
- 31: first rotating axis
- 32: second rotating axis
- 33: first rotating member
- 34: second rotating member
- 45, 45A: engaging pin (first engaging portion, engaging portion)
- 46: second engaging portion
- 48A: sheet metal
- 49E: concave portion
- 49F: rest face
- 49G: inclined face
- 51, 51A: first projecting portion
- 52: second projecting portion
- 52A: semispherical portion (tip end of second projecting portion)
- 55, 55A: first housing portion
- 56: second housing portion
- 56E: inclined face
- 58A: opening of first projecting portion (opening portion)
- 56C: opening of second projecting portion (opening portion)
- 63: upper-case magnet (magnet)

### Best Mode for Carrying Out the Invention

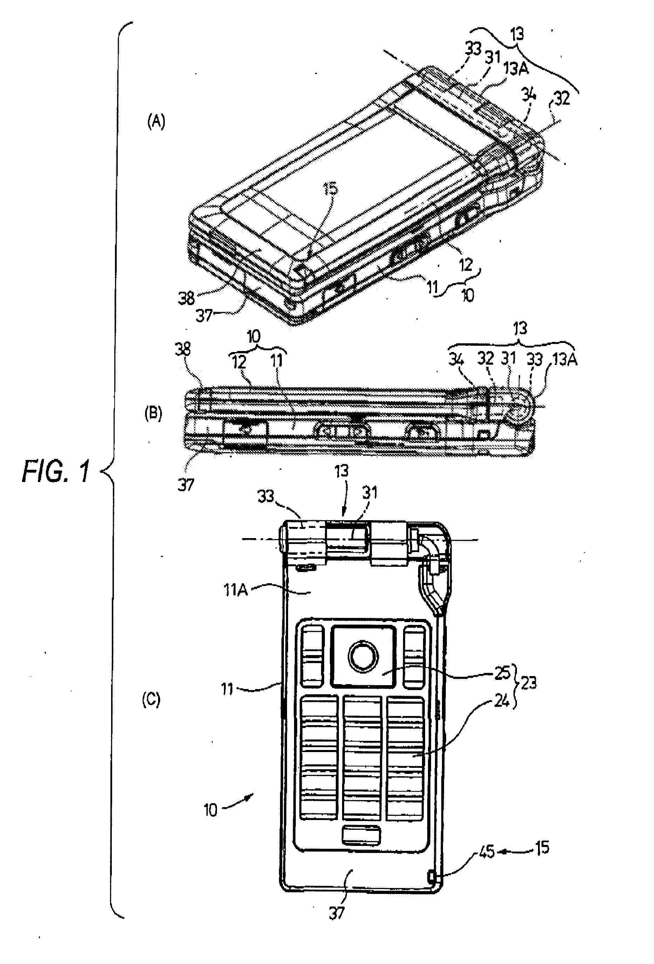

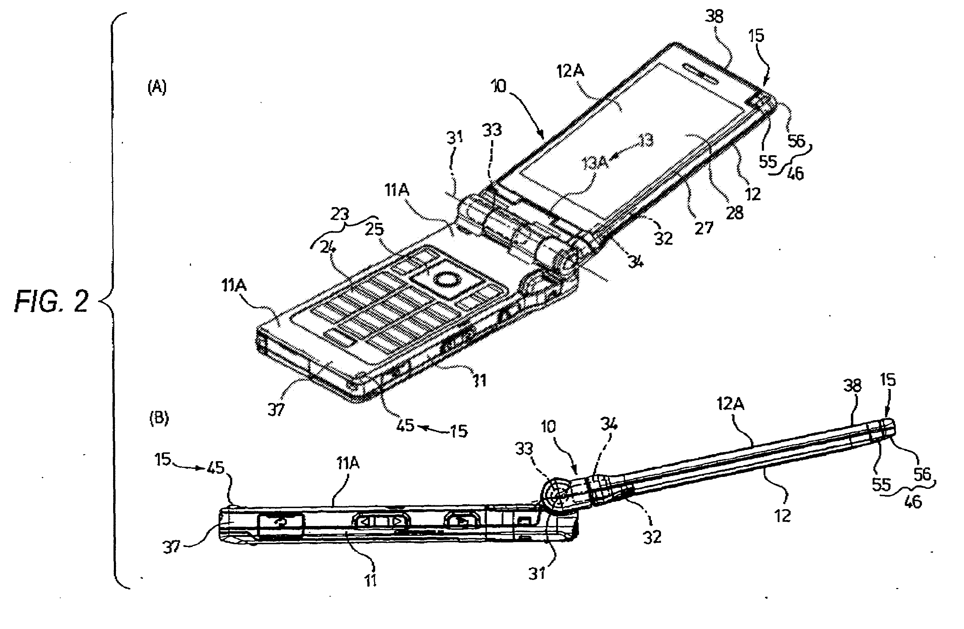

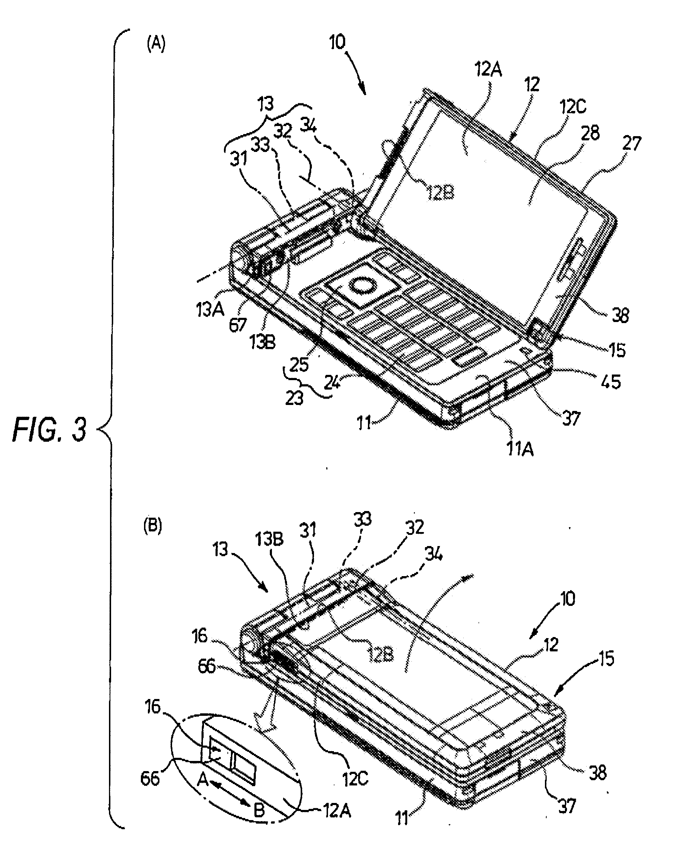

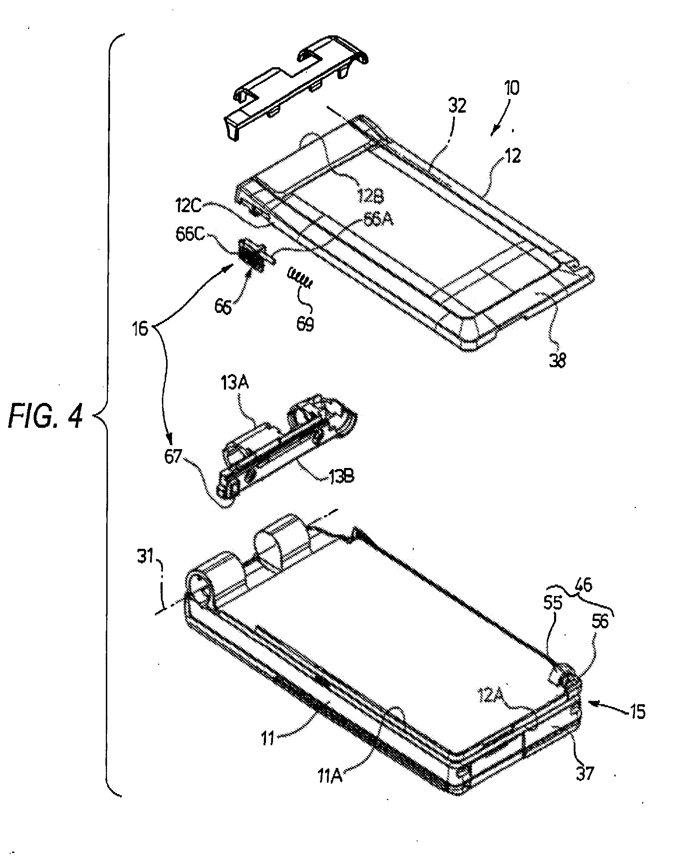

Hereinafter, a portable terminal of an embodiment of the invention will be described with reference to the drawings.
As shown in Figs. 1 to 4, the portable terminal 10 of the embodiment of the invention includes a lower case (first case) 11, an upper case (second case) 12, a coupling portion 13 which couples the lower case 11 and the upper case 12, and first engaging means 15 and second engaging means 16 which maintain the relative positions of the lower case 11 and the upper case 12 (see Figs. 3(B) and 4).
In the portable terminal 10, a closed state where the lower case 11 and the upper case 12 overlap with each other, a longitudinally opened state where, from the closed state, the upper case 12 and the coupling portion 13 integrally rotate with respect to the lower case 11 about a first rotating axis 31, and a laterally opened state where, from the closed state, the upper case 12 rotates with respect to the lower case 11 and the coupling portion 13 about a second rotating axis 32 are obtained.

In the lower case 11, an operating portion 23 including a large number of input keys 24 and function keys 24 is disposed on the surface 11A which is opposed to the upper case 12 in the closed state.
In the upper case 12, a displaying portion (LCD) 28 is disposed on the surface 12A, which is opposed to the lower case 11 in the closed state.

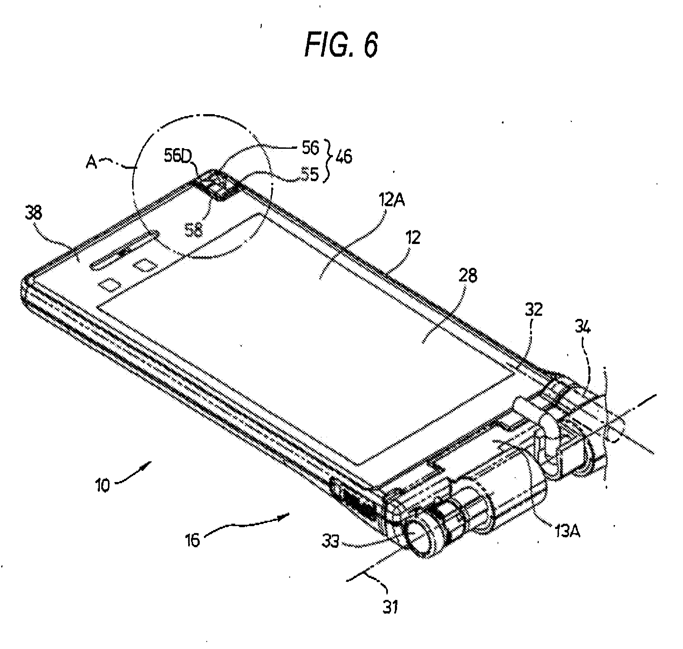

The coupling portion 13 is configured by a coupling portion body 13A, a first rotating member 33 (see also Fig. 6), and a second rotating member 34.
The first rotating member 33 is a support shaft member for coupling the lower case 11 with the coupling portion body 13A, and enabling the coupling portion body 13A to rotate with respect to the lower case 11.
In the first rotating member 33, the axis is placed along the above-described first rotating axis 31, perpendicular to the thickness direction of the lower case 11, and disposed along the short-side direction (width direction) of the lower case 11,

The second rotating member 34 is formed as a member for a support shaft for coupling the upper case 12 with the coupling portion body 13A, and enabling the upper case 12 to rotate with respect to the lower case 11 and the coupling portion body 13A.
In the second rotating member 34, the axis is placed along the above-described second rotating axis 32, perpendicular to the thickness direction of the upper case 12, and disposed along the long-side direction (longitudinal direction) of the upper case 12.
In the thus configured second rotating member 34, one end portion is coupled to the coupling portion body 13A, and the other end portion is coupled to the upper case 12. Therefore, the upper case 12 is cantilever-supported by the second rotating member 34.

Here, the first rotating axis 31 and the second rotating axis 32 indicate the directions of the center lines of rotation of the first case 11 and the second case 12 in transition where the portable terminal 10 is changed from the closed state to the longitudinally opened state or the laterally opened state.
Specifically, the first rotating axis 31 is perpendicular to the thickness direction of the lower case 11, and extends along the short-side direction (width direction) of the lower case 11. The second rotating axis 32 is perpendicular to the thickness direction of the upper case 12, and extends along the long-side direction (longitudinal direction) of the upper case 12. The first rotating axis 31 and the second rotating axis 32 are perpendicular to each other.

In the invention, in accordance with the rotating of the upper case 12 and the coupling portion 13 with respect to the lower case 11, or that of the upper case 12 with respect to the lower case 11 and the coupling portion 13, the first rotating member 33 and the second rotating member 34 rotate about the axis.
The state where the upper case 12 rotates with respect to the lower case 11 about the second rotating axis 32 indicates a change from the closed state to a completely laterally opened state, and the included angle between the lower case 11 and the upper case 12 during when the upper case 12 rotates with respect to the lower case 11 may have any value.

In the embodiment, strictly speaking, description should be made in such a manner that, when the portable terminal 10 is changed from the closed state to the longitudinally opened state, the upper case 12 and the coupling portion 13 integrally rotating with respect to the lower case 11, and, when the portable terminal 10 is changed from the closed state to the laterally opened state, the upper case 12 rotates with respect to the lower case 11 and the coupling portion 13. However, the following description will be sometimes made in such a manner that, in the longitudinally opened state or the laterally opened state, the upper case 12 rotates simply with respect to the lower case 11, and the description related to the coupling portion 13 will be sometimes simplified or omitted.

The first engaging means 15 is means for, during a period from when the portable terminal 10 starts a change from the closed state to the laterally opened state to when a completely laterally opened state is attained, and that from when the terminal returns from the laterally opened state to the closed state, engaging a longitudinal end portion 37 of the lower case 11 and a longitudinal end portion 38 of the upper case 12, i.e., end portions of the lower case 11 and the upper case 12 which are opposite to the coupling portion 13 with each other, thereby assisting the second rotating member 34 which cantilever-supports the upper case 12.
Because of the first engaging means 15, it is possible to attain an effect that, even when an external force caused by dropping, impact, or the like is applied to the portable terminal 10 in the closed state, a state between the closed state and the laterally opened state, or the completely laterally opened state, the load is not concentrated on a specific portion in the upper case 12, the coupling portion 13, the second rotating member 34, and the like, and the possibility of breakage is low,

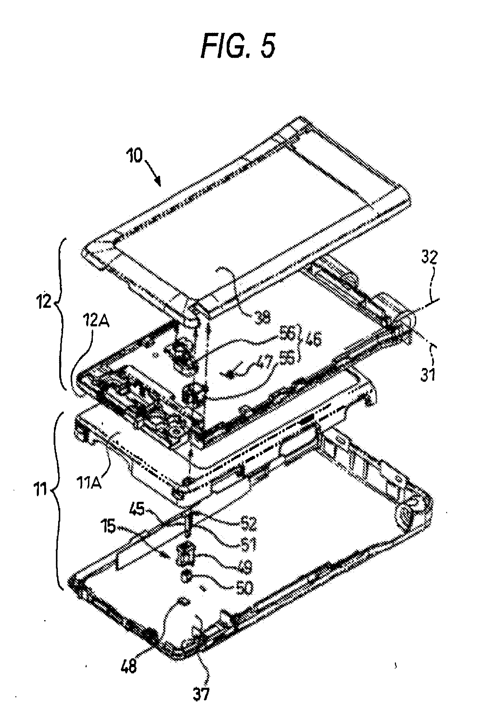

The configuration of the first engaging means 15 will be described with reference to Figs. 5 to 15.
Fig. 5 is an exploded perspective view of the lower case 11 and the upper case 12 in the state where the portable terminal 10 is in the closed state. Referring to Fig. 5, the first engaging means 15 includes: an engaging pin 45 which is a first engaging portion disposed in the longitudinal end portion 37 of the lower case 11; a holding portion 49 which holds the engaging pin 45 to the lower case 11; a stopper 50 which prevents the engaging pin 45 from dropping off from the holding portion 49; a second engaging portion 46 which is disposed in the longitudinal end portion 38 of the upper case 12; and a lower-case magnet (magnet) 48 which is disposed in the lower case 11.

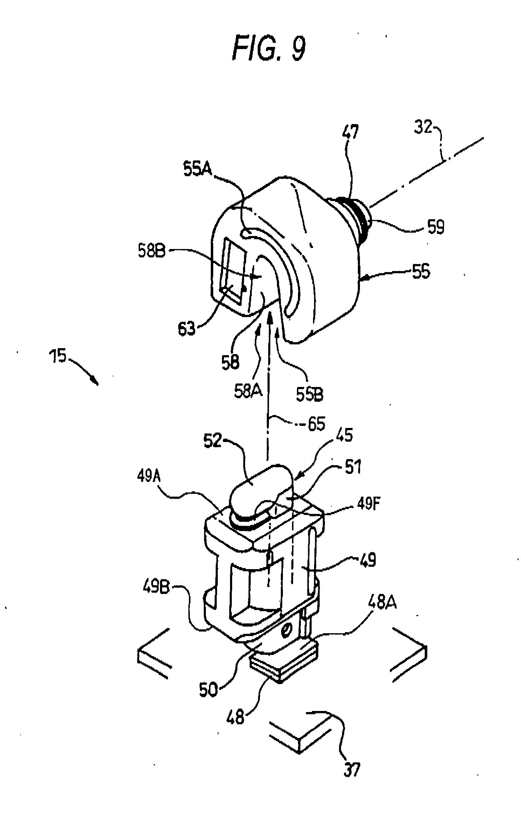

As shown also in Fig. 9, the engaging pin 45 has: a first projecting portion 51 which projects from the face including the operating portion 23 along the thickness direction of the lower case 11; and a second projecting portion 52 which is connected to the first projecting portion 51, which extends in a direction intersecting with the continuous direction of the first projecting portion 51, and which has a substantially columnar shape. Therefore, the engaging pin 45 has a shape in which the first projecting portion 51 and the second projecting portion 52 are integrally coupled to each other in a substantially L-like shape. The engaging pin 45 is rotatable by a predetermined angle (18 deg. in each of the right and left directions) about the axis of the first projecting portion 51.
The engaging pin 45 is formed by a magnetic material, and oriented so that the tip end (open end) of the second projecting portion 52 is directed toward the side opposite to the coupling portion 13, i.e., the longitudinal end portion 37 of the lower case 11, and can project from the lower case 11 to a position where the axis of the second projecting portion 52 extends along the second rotating axis 32.

The holding portion 49 is housed in the lower case 11 to be fixed thereto, and passed through the first projecting portion 51 of the engaging pin 45. In order to hold the engaging pin 45 so as to be rotatable only by a predetermined angle as described above, the first projecting portion 51 may have a circular section shape, and a stopper may be disposed so that the pin is rotatable by a predetermined angle. Alternatively, the first projecting portion 51 may have a rectangular section shape, and a hole which supports the first projecting portion 51 in the holding portion may have a circular section shape along which the rectangular section shape can rotate by a predetermined angle.
Preferably, the engaging pin 45 rotates so that the tip end of the second projecting portion 52 approaches the operating portion 23.

According to the configuration, when an external force for causing the engaging pin 45 to rotate is applied, rotating is performed in the direction opposite to the side where the second projecting portion 52 is locked by the second engaging portion 46 (i.e., the side of a second housing portion 56). Therefore, the engaging pin 45 is easily disengaged from the second engaging portion 46.

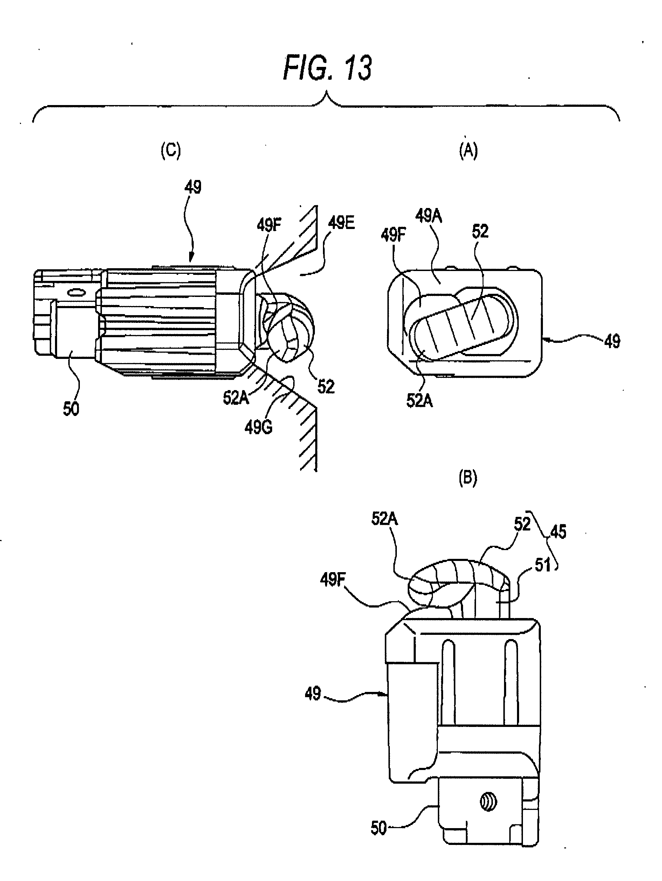

As shown in Figs. 13(A) to (C), preferably, a concave portion 49E which houses the second projecting portion 52 of the engaging pin 45 so as not to project in the state where the upper case 12 rotates about the first rotating axis 31 to be opened (i.e., the longitudinally opened state), and a concave rest face 49E on which the second projecting portion 52 rests is disposed in a bottom portion of the concave portion 49E. The inside of the concave portion 49E is formed as an inclined face 49G which guides the second projecting portion 52 toward the bottom portion.

When the upper case 12 rotates about the first rotating axis 31, therefore, the engaging pin 45 is not engaged with the second engaging portion 46, and hence the engaging pin 45 is housed in the concave portion 49E so that the engaging pin 45 docs not project from the surface 11A of the lower case 11. At this time, the rest face 49F is disposed in the bottom portion of the concave portion 49E, and the inclined face 49G which guides the second projecting portion 52 is disposed on the inner face of the concave portion 49E. Therefore, the rotatable second projecting portion 52 can be surely housed.

As shown in Fig. 9, in the engaging pin 45, the stopper 50 is disposed on the side of the basal end portion of the first projecting portion 51 in the state where the engaging pin 45 is passed through the holding portion 49, i.e., an end portion opposite to the connecting place of the first projecting portion 51 with respect to the second projecting portion 52. The stopper 50 has a metallic cylindrical shape, and is passed through and fixed to the basal end portion of the first projecting portion 51.
When the engaging pin 45 is a magnetic member, the stopper 50 may be a nonmagnetic member other than a metal.

The thus configured stopper 50 is slidable with respect to the holding portion 49 along the axial direction of the first projecting portion 51 in the range from a position where the second projecting portion 52 is contacted with the rest face 49F of the upper face 49A of the holding portion 49, to that where the stopper 50 is contacted with the lower face 49B of the holding portion 49.
The engaging pin 45 is placed so that, when the pin is at the position where the second projecting portion 52 is contacted with the upper face 49A of the holding portion 49, a top portion of the first projecting portion 51 and the second projecting portion 52 do not project from the surface 11A of the lower case 11, and, when the pin is at the position where the stopper 50 is contacted with the lower face 49B of the holding portion 49, the axis of the second projecting portion 52 extends along the second rotating axis 32.

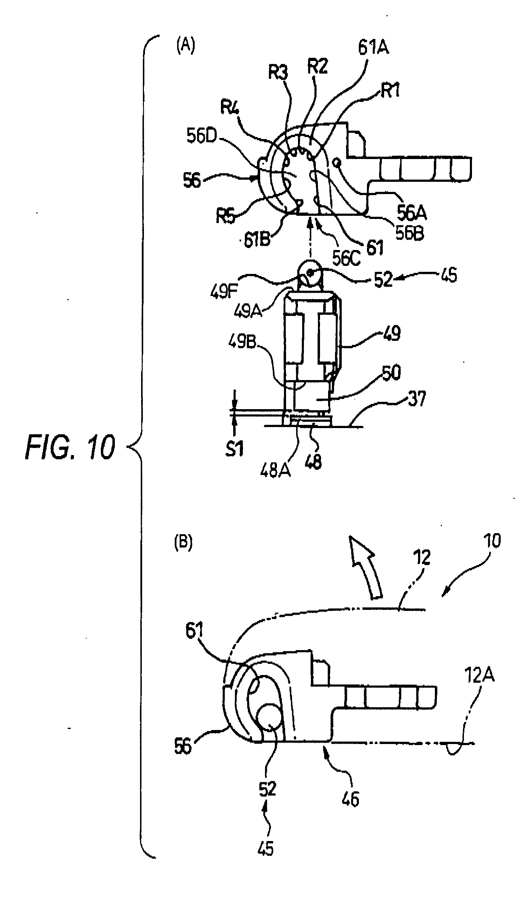

The lower-case magnet 48 is placed immediately below the engaging pin 45 which extends along the axial direction of the first projecting portion 51 inside the lower case 11. As shown in Fig. 10(A), the lower-case magnet 48 is placed at a position where, when the second projecting portion 52 is contacted with the upper face 49A of the holding portion 49, or namely when the engaging pin 45 is housed in the lower case 11, the magnet is not contacted with the stopper 50 through a gap S1.

A sheet metal 48A is laminated on the surface of the lower-case magnet 48, and hence the magnetic force of the lower-case magnet 48 with respect to the engaging pin 45 can be arbitrarily set by adequately selecting the material, thickness, area, and the like of the sheet metal 48A.

The second engaging portion 46 has: a first housing portion 55 (see Figs. 5, 6, and 9) into which, at a position opposed to the engaging pin 45 which is the above-described first engaging portion, in the state where the portable terminal 10 is closed, the first projecting portion 51 of the engaging pin 45 projecting from the lower case 11 can be inserted; and the second housing portion 56 (see Figs. 5, 6, and 10) into which the second projecting portion 52 of the engaging pin 45 projecting from the lower case 11 is inserted.
In the second engaging portion 46, the first housing portion 55 and the second housing portion 56 are arranged in the longitudinal direction of the upper case 12, and the first housing portion 55 is placed at a position which is close to the coupling portion 13.

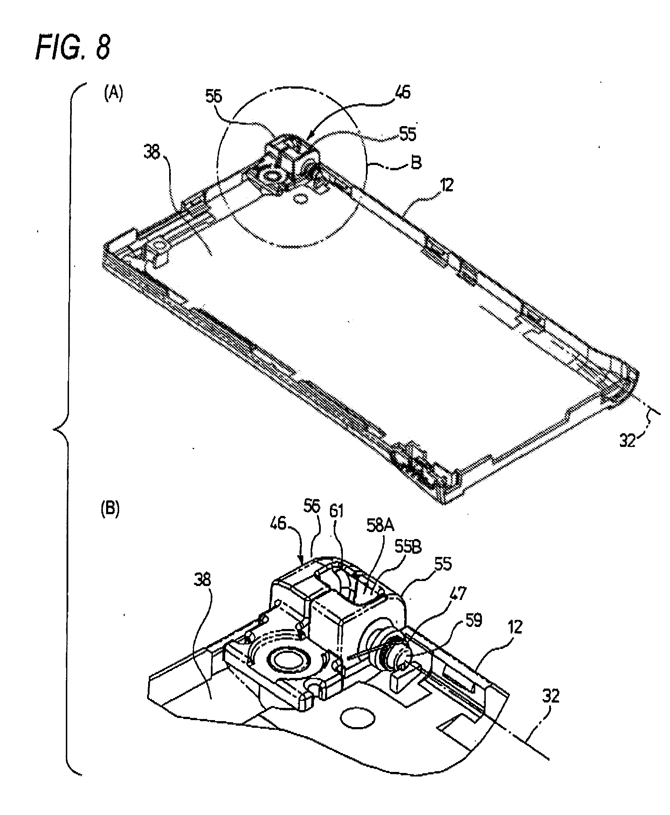

As shown in Figs. 8 and 9, the first housing portion 55 is configured as a block member in which an opening 58A having a substantially rectangular shape and an opening 58B having a substantially V-like shape are formed by a sector-like lightening portion 55B having a predetermined thickness, and disposed so that the opening 58A extends along the surface 12A of the upper case 12 (see Fig. 6).
A shaft portion 59 which is formed on the side opposite to the opening 58B is placed so that the axis passes through the arc center of the opening 588. The inner face 58 of the lightening portion 55B is formed as a smooth face.

In the first housing portion 55, an upper-case magnet (magnet) 63 is embedded into the periphery of the lightening portion 55B by insert molding, and an arcuate guide groove 55A is formed in the periphery of the opening.
As the upper-case magnet 63, a magnet which is larger in magnetic force than the above-described lower-case magnet 48 is employed. The guide groove 55A is placed so that the arc center extends along the axis of the shaft portion 59.
The thus configured first housing portion 55 is placed so that the axis of the shaft portion 59 extends along the second rotating axis 32, and maintained so that the opening 58A always extends along the surface 12A of the upper case 12, by a return spring 47 which is a torsion spring through which the shaft portion 59 is passed.

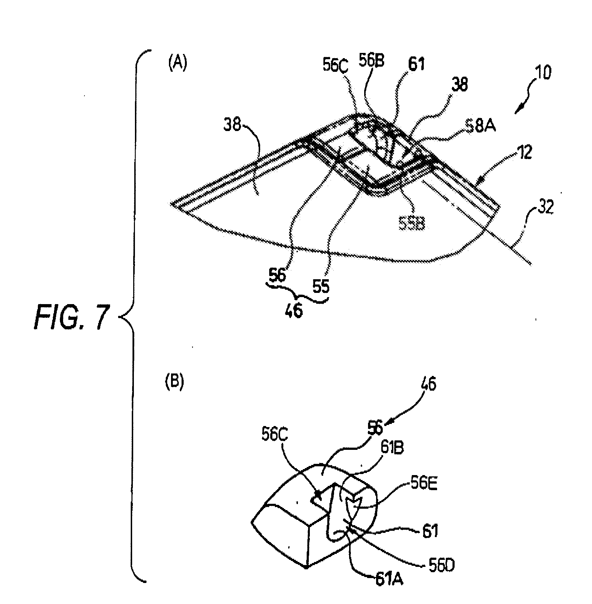

As shown in Figs. 7, 8, and 10, the second housing portion 56 is formed into a block-like shape having a substantially rectangular opening 56C and a substantially U-like opening 56D, by a substantially U-like lightening portion 56.8. A projection 56A is disposed in the periphery of the opening 56D. The projection 56A is inserted into the guide groove 55A of the first housing portion 55.
The second housing portion 56 is placed adjacently to the first housing portion 55, and fixed to the upper case 12 so that the opening 56C extends along the surface 12A of the upper case 12.

Since the opening 58A of the first housing portion 55 is maintained so as to extend along the surface 12A of the upper case 12, by the return spring 47, the thus configured second engaging portion 46 is usually oriented so that the opening 58A of the first housing portion 55 and the opening 56C of the second housing portion 56 are continuous to each other along the surface 12A of the upper case 12.

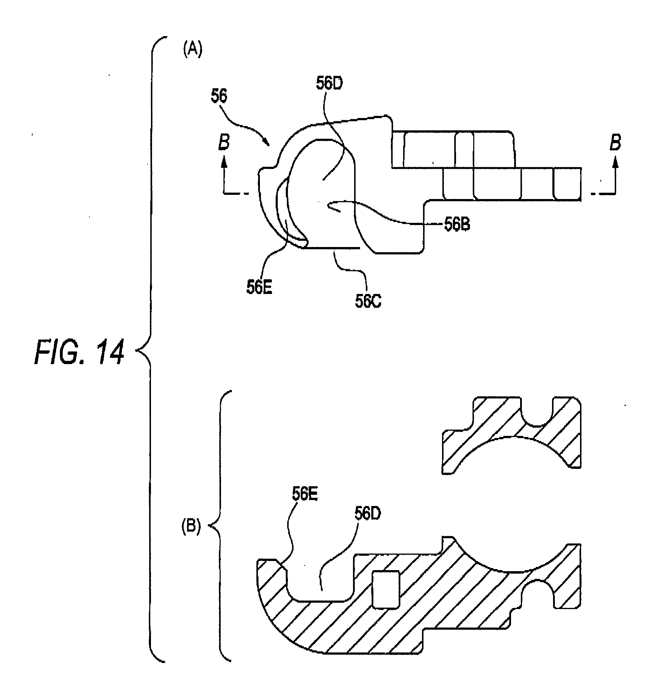

As shown in Figs. 14(A), (B), and 7(B), in the second housing portion 56, preferably, an inclined face 56E is disposed in an opening edge portion on the side of the first housing portion 55, and on the side of the side end face of the upper case 12.
According to the configuration, in the case where the engaging pin 45 and the second engaging portion 46 are not properly engaged with each other, disengagement from the second housing portion 56 can be performed along the inclined face 56E disposed in the second housing portion 56 housing the second projecting portion 52 of the engaging pin 45. The angle of the inclined face 56E is not restricted.

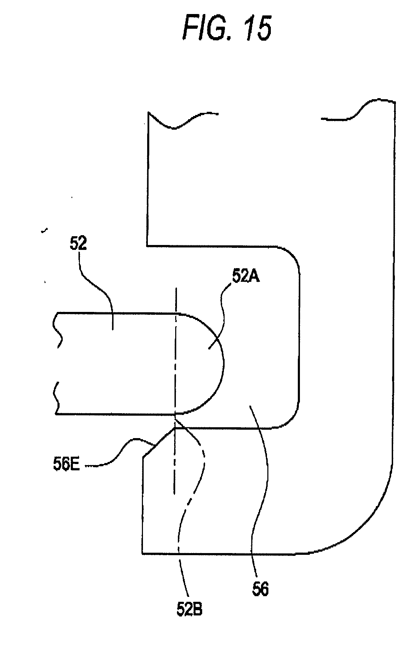

As shown in Figs. 14 and 15, preferably, the inclined face 56E begins at a position corresponding to a starting position 52B of a semispherical portion 52A of the tip end of the second projecting portion 52. According to the configuration, when the insertion amount of the second projecting portion 52 is insufficient, the semispherical portion 52A is immediately caught by the inclined face 56E, and hence the second projecting portion 52 is disengaged from the second housing portion 56.

The second engaging means 16 is means for, in the closed state and in the longitudinally opened state of the portable terminal 10, restricting the rotating of the upper case 12 with respect to the coupling portion body 13A of the coupling portion 13 so that the upper case 12 does not rotate about the second rotating axis 32.
Because of the second engaging means 16, it is possible to attain an effect that, in the closed state and in the longitudinally opened state of the portable terminal 10, the upper case 12 does not rotate about the second rotating axis 32 without intention by the user, and hence a load is prevented from being concentrated to a specific portion in the upper case 12, the coupling portion 13, the second rotating member 34, and the like, and causing breaking.

Returning to Figs. 3 to 4, the configuration of the second engaging means 16 will be described.
The second engaging means 16 includes: an engaging portion 66 which is to be coupled to the coupling portion body 13A of the coupling portion 13, and which is disposed in a short-side face 12C of the upper case 12; and an engaging portion 67 which is disposed in an end face 13B of the coupling portion body 13A opposed to a short-side face 12B, and which is to be engaged with the engaging portion 66.
The engaging portions 66, 67 are placed on the side which is opposite along the width direction to the position where the second rotating member 34 is placed.

The engaging portion 66 has: a lock pin 66A which is projectable and retractable from the short-side face 12B of the upper case 12 toward the end face 13B of the coupling portion body 13A; a return spring 69 which urges the lock pin 66A toward the end face 13B of the coupling portion body 13A; and a lock button 66C which is used for housing the lock pin 66A in the upper case 12 while compressing the return spring 69. The lock pin 66A is held to a state where the pin is projected from the short-side face 12B of the upper case 12, by the return spring 69.

In the thus configured engaging portion 66, when the user slides the lock button 66C disposed in the side portion 12A of the upper case 12 along the direction of arrow A-B (see Fig. 3(B), the longitudinal direction of the upper case 12), the lock pin 66A can be housed in the upper case 12.
The engaging portion 67 is configured as an engaging hole in which the tip end of the lock pin 66A can be housed (see Figs. 3(A) and 4).

In a state where the tip end of the lock pin 66A is engaged with the engaging portion 67, the thus configured second engaging means 16 restricts the rotating of the upper case 12 with respect to the coupling portion body 13A of the coupling portion 13.
In the portable terminal 10, in the closed state and the longitudinally opened state, therefore, the upper case 12 does not rotate about the second rotating axis 32 without intention by the user, and hence a load is prevented from being concentrated to a specific portion in the upper case 12, the coupling portion 13, the second rotating member 34, and the like, and causing breaking.

When the user is to change the portable terminal 10 from the closed state to the laterally opened state, the user operates the lock button 66C to cancel the engagement state between the engaging portions 66, 67, and thereafter manually causes the upper case 12 to rotate about the second rotating axis 32 with respect to the coupling portion body 13A of the coupling portion 13.

When the user is to change the portable terminal 10 from the laterally opened state to the closed state, the user manually causes the upper case 12 to rotate about the second rotating axis 32 with respect to the coupling portion body 13A of the coupling portion 13. Then, the lock pin 66A in which the tip end is contacted with the engaging portion 67 is temporally housed in the upper case 12 while compressing the return spring 69, and thereafter the lock pin 66A again projects from the upper case 12 in accordance with extension of the return spring 69 to be engaged with the engaging portion 67, whereby the rotating of the upper case 12 with respect to the coupling portion body 13A of the coupling portion 13 is again restricted.

Next, the operation of the portable terminal 10 of the embodiment will be described.
In the state where the portable terminal 10 is in the closed state, i.e., in the state where the lower case 11 and the upper case 12 overlap with each other, the top portion of the first projecting portion 51 of the engaging pin 45 which is the first engaging portion of the first engaging means 15, and the second projecting portion 52 are opposed to the first housing portion 55 of the second engaging portion 46, and the second housing portion 56.

In this case, the influence of the magnetic force of the upper-case magnet 63 on the engaging pin 45 is larger than that of the magnetic force of the lower-case magnet 48. Therefore, the engaging pin 45 is pulled out and surely projects from the surface 11A of the lower case 11 by the magnetic force of the upper-case magnet 63, and the top portion of the first projecting portion 51 and the second projecting portion 52 are inserted from the openings 58A, 58C into the first housing portion 55 and the second housing portion 56.
In this case, the opening 58A of the first housing portion 55 and the opening 56C of the second housing portion 56 are caused by the return spring 47 to be continuous to each other along the surface 12A of the upper case 12. Therefore, the top portion of the first projecting portion 51 and the second projecting portion 52 are smoothly inserted into the first housing portion 55 and the second housing portion 56.

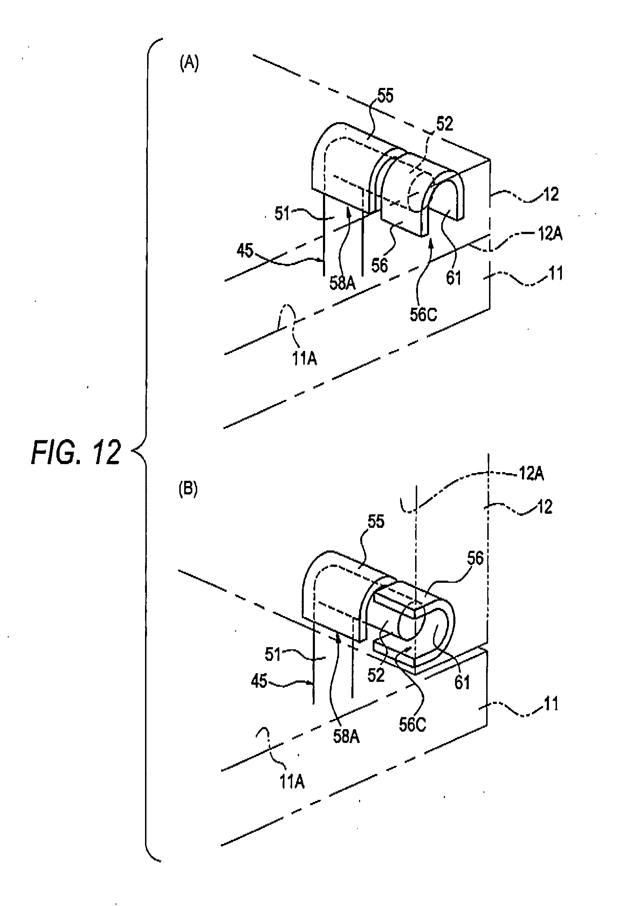

As shown in Fig. 12(A), in the state where the portable terminal 10 is closed, the engaging pin 45 which is the first engaging portion is inserted into the first housing portion 55 and second housing portion 56 of the second engaging portion 46. Since both the opening 58A of the first housing portion 55 and the opening 56C of the second housing portion 56 are opposed to the surface 11A of the lower case 11, the engaging pin 45 is insertable and extractable with respect to the first housing portion 55 and the second housing portion 56, and a so-called unlocked state of the first engaging means 15, in other words, the lock cancelled state is attained.
Fig. 12(A) shows the first engaging means 15 in the state where the portable terminal 10 is closed, and Fig. 12(B) shows the first engaging means 15 in the state where the portable terminal 10 is laterally opened.

As shown in Fig. 9, in the first housing portion 55, the upper-case magnet 63 is placed by insert molding in the very proximity to a side portion of a projection axis 65 of the engaging pin 45. Therefore, the magnet is requested to have a necessary minimum magnetic force, and the engaging pin 45 can be projected from the lower case 11 without using a strong magnet which may possibly affect electronic components in the upper case 12.
Since the upper-case magnet 63 is insert molded into the first housing portion 55, it is not necessary to place (incorporate) separately and individually the upper-case magnet 63.

Next, when the portable terminal 10 is transitioned from the closed state to the longitudinally opened state, i.e., in the state where the upper case 12 starts to rotate about the first rotating axis 31 with respect to the lower case 11 and in the transition state between the opened state where the surface 11A of the lower case 11 and the surface 12A of the upper case 12 separate from each other, and the closed state, the top portion of the first projecting portion 51, and the second projecting portion 52 begin to escape from the first housing portion 55 and the second housing portion 56.
In this case, because of the return spring 47, the opening 58A of the first housing portion 55 and the opening of the second housing portion 56 are continuous to each other along the surface 12A of the upper case 12. Therefore, the top portion of the first projecting portion 51, and the second projecting portion 52 smoothly escape from the first housing portion 55 and the second housing portion 56, and begin to be disengaged from the second housing portion 56.

In accordance with the separation between the surface 11A of the lower case 11 and the surface 12A of the upper case 12, the influence of the magnetic force of the upper-case magnet 63 on the engaging pin 45 is reduced. When the influence of the magnetic force of the lower-case magnet 48 on the engaging pin 45 relatively exceeds that of the magnetic force of the upper-case magnet 63, the engaging pin 45 is attracted into the lower case 11 by the magnetic force of the lower-case magnet 48 until the second projecting portion 52 is contacted with the upper face 49A of the holding portion 49, whereby the engaging pin 45 is housed into the lower case 11 so that the top portion of the first projecting portion 51, and the second projecting portion 52 do not project from the surface 11A of the lower case 11.

As described above, during the period from when the portable terminal starts the change from the closed state to the longitudinally opened state to when a completely longitudinally opened state is attained, the engaging pin 45 is housed in the lower case 11. Therefore, there is no possibility that the engaging pin 45 interferes with the face of the user in a voice call, the finger of the user operating the operating portion 23 interferes with the engaging pin 45 in writing/reading or transmission/reception of e-mail, Web browsing, or various settings to impair the operability of the operating portion 23, or the engaging pin 45 is broken.
The engaging pin 45 is housed in the lower case 11 so that the lower-case magnet 48 and the stopper 50 are not contacted with each other. When the portable terminal 10 is again set to the closed state, therefore, the engaging pin can rapidly project from the surface of the lower case 11 as compared with a state where, for example, the lower-case magnet 48 and the stopper 50 are contacted with each other.

When the portable terminal 10 then changes from the closed state to the laterally opened state, i.e., when the upper case 12 starts to rotate about the second rotating axis 32 with respect to the lower case 11 and the surface 11A, of the lower case 11 and the surface 12A of the upper case 12 separate from each other, the second housing portion 56 rotates so as to involve the second projecting portion 52 while following the upper case 12. However, the edge portion of the opening 58A is contacted with the side face of the first projecting portion 51, whereby the rotation of the first housing portion 55 is restricted. Relative rotating with respect to the upper case 12 is performed while compressing the return spring 47 in the winding direction, and the state where the opening 58A is opposed to the surface 11A of the lower case 11 is maintained.

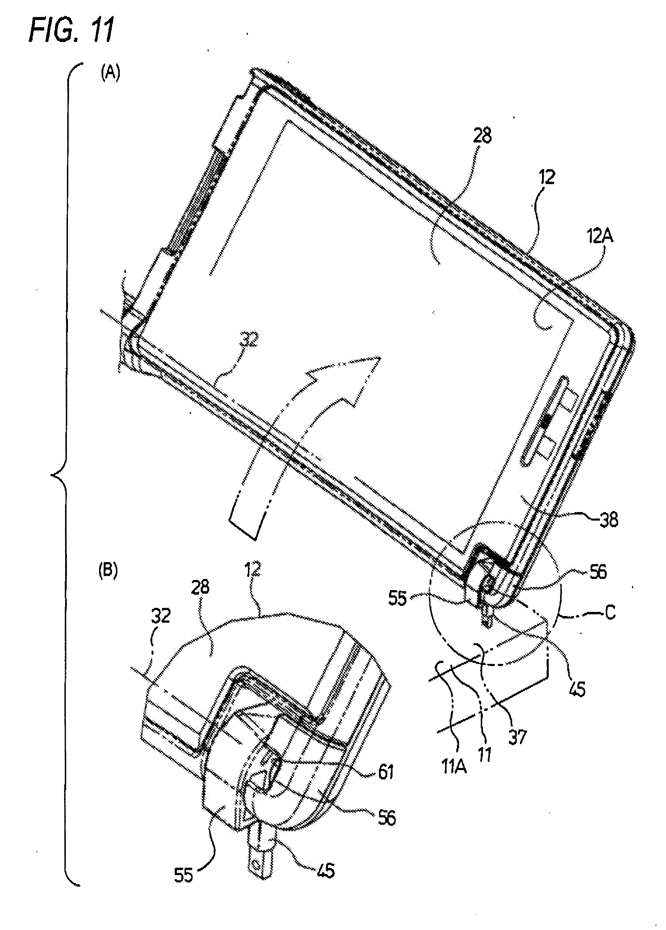

Fig. 11 is a perspective view showing a state where, in the state where the portable terminal 10 is closed, the upper case 12 rotates about the second rotating axis 32 by a predetermined angle.

As shown in Fig. 10(A), in the second housing portion 56, the inner face 61 which is perpendicular to the openings 56C, 56D is formed as a smooth curved face. The inner face 61 is formed by a plurality of curved faces in which the radii of curvature R1 to R5 are continuously larger as more advancing from a rear portion 61A that is remotest from the opening 56C, toward a front portion 61B that is closest to the opening 56C.
In the second housing portion 56, namely, the radius of curvature of the inner face 61 which is perpendicular to the openings 56C, 56D is continuously reduced as advancing from the inlet side toward the rear side. When the second housing portion rotates while following the upper case 12, therefore, the peripheral face of the second projecting portion 52 of the engaging pin 45 is caught, and can be surely held in the lightening portion 56B.

Specifically, the second projecting portion 52 of the engaging pin 45 is smoothly guided from the opening 61B into the opening portion 61 of the second housing portion 56, and the so-called second projecting portion 52 can be easily picked up.
In this stage, the peripheral face of the second projecting portion 52 is covered by the second housing portion 56. Therefore, the engaging pin 45 which is the first engaging portion cannot be extracted from the second engaging portion 46, and the longitudinal end portions of the lower case 11 and the upper case 12 are engaged with each other by the first engaging means 15, so that a so-called locked state is attained.

In the embodiment, when, in the closed state of the portable terminal 10, the upper case 12 rotates with respect to the lower case 11 about the second rotating axis 32 and the included angle between the surface 11A of the lower case 11 and the surface 12A of the upper case 12 becomes more than about 30 degrees, the second projecting portion 52 cannot be extracted from the second housing portion 56, and is set to the state where it is locked by the first engaging means 15.

The radius of curvature of the inner face 61 of the second housing portion 56 is continuously reduced as advancing from the inlet side toward the rear side. When the engaging pin 45 is pulled out from the lower case 11 until the stopper 50 is contacted with the holding portion 49, and the portable terminal 10 is set to the completely laterally opened state, therefore, the axis of the second projecting portion 52 of the engaging pin 45 is placed along the second rotating axis 32.

According to the thus configured portable terminal 10 of the embodiment, in the closed state, the engaging pin 45 which is the first engaging portion is projected from the lower case 11 by the magnetic force of the upper-case magnet 63 to be inserted into the first housing portion 55 and second housing portion 56 of the second engaging portion 46, but is not locked, and, in the longitudinally opened state, the engaging pin 45 is housed in the lower case 11 by the magnetic force of the lower-case magnet 64, and, in the laterally opened state, is set to the locked state by the second housing portion 56 which follows the upper case 12. Therefore, the first engaging means 15 assists the second rotating member 34 which cantilever-supports the upper case 12.
According to the portable terminal 10, even when an external force caused by dropping, impact, or the like is applied to the portable terminal in a state between the closed state and the laterally opened state, or the completely laterally opened state, therefore, the load is not concentrated on a specific portion in the upper case 12, the coupling portion 13, the second rotating member 34, and the like, and the possibility of breakage is low.

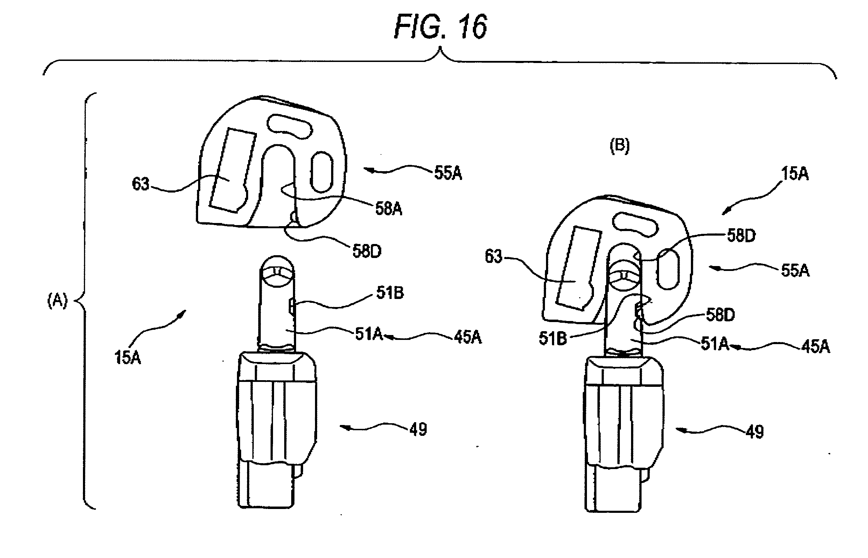

Although, in the embodiment described above, the first engaging means 15 in which the inner face 58 of the first housing portion 55 is formed as a smooth face has been exemplarily described, also first engaging means 15A shown in Fig. 16 is included in the invention.
In the first engaging means 15A shown in Fig. 16, a projection portion 58D is disposed on an inner face 58C of a first housing portion 55A. On the other hand, a concave portion 51B is disposed in the side face of a first projecting portion 51A of an engaging pin 45A which is inserted into the first housing portion 55A.

In the thus configured first engaging means 15A, also when the portable terminal 10 is changed from the closed state to the laterally opened state, i,e., when the upper case 12 starts to rotate with respect to the lower case 11 about the second rotating axis 32 but the included angle between the surface 11A of the lower case 11 and the surface 12A of the upper case 12 is less than about 30 degrees (low angle (obtuse angle)), so that the locked state is not attained, the projection portion 58D of the first housing portion 55A and the concave portion 51B of the engaging pin 45A are engaged with each other. Even when an external force caused by impact or the like is applied to the portable terminal, therefore, it is possible to prevent the engaging pin 45A from dropping off from the first housing portion 55A.

In the embodiment described above, the first housing portion 55 rotates with respect to the upper case 12, and the second housing portion 56 is fixed to the upper case 12. However, the invention is not restricted to this. Depending on the shape of the engaging pin 45, an opening may be formed in the surface 12A of the upper case 12.
For example, a configuration where a part of the opening is connected to a side face portion of the upper case 12 may be formed, and, in the laterally opened state, a part of the engaging pin 45 may be configured so as to be caught by an opening portion.

Although, in the embodiment described above, the example in which the engaging pin 45 is formed into a substantially L-like shape by the first projecting portion 51 and the second projecting portion 52 has been described, the invention is not restricted to this. For example, the tip end of the engaging pin may be formed into a T-like shape, a ball-like shape, or an L-like shape which is directed oppositely to the direction of the engaging pin 45.

Next, a second embodiment of the invention will be described.
In the embodiment described above, the first projecting portion 51 and second projecting portion 52 which constitute the engaging pin 45 are integrally formed. As shown in Fig. 16, alternatively, the first projecting portion 51 and the second projecting portion 52 may be separately configured. For example, a rotating shaft 51C which is upward directed is disposed on the upper end face of the first projecting portion 51, and, on the other hand, a shaft hole 52C into which the rotating shaft 51C is fitted to rotatably support the second projecting portion 52 is disposed in the separate second projecting portion 52.

According to the configuration, the second projecting portion 52 is rotatable, and hence functions and effects which are similar to those of the above-described first embodiment can be obtained. In the case where the rotating angle of the second projecting portion 52 is restricted, the rotating shaft 51C may have for example a rectangular section, and the section of the shaft hole 52C may have a shape in which the rotating shaft 51C can rotate by a predetermined angle. Alternatively, both the rotating shaft 51C and the shaft hole 52C may have a circular section, and stoppers which restrict the rotating range of the second projecting portion 52 may be separately disposed.

The application is based on Japanese Patent Application (No. 2007-159407) filed June 15, 2007, Japanese Patent Application (No. 2007-206816) filed August 8, 2007, and Japanese Patent Application (No. 2007-284178) filed October 31, 2007, and their disclosures are incorporated herein by reference.

### Industrial Applicability

According to the invention, the second housing portion in which the magnet of the second engaging portion is disposed attracts the engaging pin formed by a magnetic material, by a magnetic force to project the engaging pin from the surface of the first case, and the second case is caused to rotate about the second rotating axis, whereby the second projecting portion is housed in the second housing portion and the engaging pin is locked. The second projecting portion is rotatable about the axis of the first projecting portion. In an insufficient engagement state such as the case where the engaging pin is not sufficiently projected, or that where the second projecting portion is not at a predetermined position, when an external force which causes the second case to relatively move with respect the first case acts, therefore, the engaging pin is disengaged from the second engaging portion. Consequently, the invention has an effect that the engaging pin, the periphery of the second engaging portion in the second case, and the like can be prevented from being broken, and is suitably applied to a portable terminal in which first and second cases are coupled to each other through a coupling portion, and which can be opened and closed from the closed state to the longitudinally opened state or the laterally opened state.

## Claims

1. A portable terminal including:
a first case including an operating portion;
a second case including a displaying portion; and
a coupling portion which rotatably couples said first case and said second case to each other, wherein
said coupling portion is configured by: a first rotating member which is coupled to said first case to enable said second case to rotate with respect to said first case about a first rotating axis; and a second rotating member which is coupled to a short-side direction end portion of said second case to enable said second case to rotate with respect to said first case about a second rotating axis that is perpendicular to said first rotating axis,
said first case has a first engaging portion in a face including said operating portion, and on a side which is opposite in a longitudinal direction to a side where said first case is coupled to said coupling portion,
said second case has a second engaging portion in a longitudinal direction of a face including said displaying portion, at a position corresponding to said first engaging portion, and on a side which is opposite to a side where said second rotating member is coupled to said coupling portion,
said first engaging portion and said second engaging portion are not locked to each other in a state where said first case and said second case overlap with each other, and
said first engaging portion and said second engaging portion are engaged and locked to each other in a state where said second case rotates about said second rotating axis to be opened.

2. A portable terminal according to claim 1, wherein
a magnet is disposed in said second engaging portion,
said first engaging portion is configured by a magnetic material, and said first engaging portion is projected by a magnetic force of said magnet to be engaged with said second engaging portion.

3. A portable terminal according to claim 2, wherein
said magnet of said second engaging portion is placed in a side portion in a direction along which said first engaging portion is projected.

4. A portable terminal according to claim 2 or 3, wherein
said terminal includes a magnet at a position which, in said fist case, is separated by a constant distance from said first engaging portion, and a side opposite to a face opposed to said second case, and,
in a state where said second case rotates with respect to said first case about said first rotating axis to be in an opened state, said first engaging portion is caused not to be projected, by a magnetic force of said magnet.

5. A portable terminal according to claim 4, wherein, in said first case, a sheet metal is placed between said first engaging portion and said magnet.

6. A portable terminal according to claim 1, wherein
said first engaging portion is configured by an engaging pin having:
a first projecting portion; and
a second projecting portion which intersects with said first projecting portion, and which extends along said second rotating axis, and
said second engaging portion is configured by:
a first housing portion which houses said first projecting portion in an opening portion, and which rotates with respect to said second case about said second rotating axis; and
a second housing portion which houses said second projecting portion in an opening portion, and which is fixed to said second case.

7. A portable terminal according to claim 6, wherein, when said first projecting portion is housed and said second case rotates about said second rotating axis, said opening portion of said first housing portion is at a position opposed to an operating portion face of said first case.

8. A portable terminal according to claim 6, wherein said opening portion of said second housing portion is formed into a concave shape, and has a curved face in which a radius of curvature is larger as more advancing from a bottom portion of said opening portion toward an opening.

9. A portable terminal according to claim 6, wherein a return spring which makes said opening portion of said first housing portion coincident with said opening portion of said second housing portion is disposed.

10. A portable terminal according to claim 1, wherein,
in a face where said second case is coupled to said coupling portion, said terminal further includes a pair of engaging portions on a side opposite in a short-side direction to the side where said second rotating axis portion is placed, and,
in the state where said first case and said second case overlap with each other, rotating about the second rotating axis is restricted by said pair of engaging portions.

11. A portable terminal including:
a first case including an operating portion;
a second case including a displaying portion; and
a coupling portion which rotatably couples said first case and said second case to each other, wherein
said coupling portion is configured by: a first rotating member which is coupled to said first case to enable said second case to rotate with respect to said first case about a first rotating axis; and a second rotating member which is coupled to a short-side direction end portion or said second case to enable said second case to rotate with respect to said first case about a second rotating axis that is perpendicular to said first rotating axis,
said first case has a first engaging portion configured by an engaging pin having: a first projecting portion which is projected from a face including said operating portion, on a side opposite in a longitudinal direction to a side where said first case is coupled to said coupling portion; and a second projecting portion which intersects with said first projecting portion, and which extends along said second rotating axis,
said second case has a second engaging portion in a longitudinal direction of a face including said displaying portion, at a position corresponding to said first engaging portion, said second engaging portion being configured by: a first housing portion which houses said first projecting portion in an opening portion, and which rotates with respect to said second case about said second rotating axis; and a second housing portion which houses said second projecting portion in an opening portion where an inclined face is formed in an inner face, and which is fixed to said second case,
said first engaging portion and said second engaging portion are not locked to each other in a state where said first case and said second case overlap with each other,
said first engaging portion is projected by a magnetic force of said magnet, and said first engaging portion and said second engaging portion are engaged and locked to each other in a state where said second case rotates about said second rotating axis to be opened, and,
in a transition state between the opened state and the closed state,
in a state where said second projecting portion is housed in said second housing portion, said second projecting portion rotates along said inclined face of said second housing portion about an axis of said first projecting portion, to be disengaged from said second housing portion.

12. A portable terminal according to claim 11, wherein, in said first engaging portion, said first projecting portion and said second projecting portion are integrally formed.

13. A portable terminal according to claim 11 or 12, wherein
said portable terminal further includes a holding portion which holds said first engaging portion to an interior of said first case, and,
in a state where said second case rotates about said fist rotating axis to be opened, a concave portion which houses said second projecting portion is configured in a top face of said holding portion so that said first engaging portion does not project from said displaying portion face,
said concave portion forming an inclination for guiding said second projecting portion.

14. A portable terminal according to claim 11 or 12, wherein said inclined face of said second housing portion is an edge portion on a side of said first housing portion, and disposed on a side of a side end face of said second case.
